# EUROPÄISCHE PATENTSCHRIFT

(11) **EP 4 511 951 B1**
(45) Veröffentlichungstag und Bekanntmachung des Hinweises auf die Patenterteilung: **24.12.2025**
(21) Anmeldenummer: 23745078.8
(22) Anmeldetag: 05.07.2023
(51) Int. Cl.: H02K 11/33, H02K 3/50, H02K 3/12, H02K 9/22

(54) **ELEKTROMOTOR MIT LEISTUNGSELEKTRONIK-BAUGRUPPE**
ELECTRIC MOTOR WITH POWER ELECTRONICS ASSEMBLY
MOTEUR ÉLECTRIQUE AVEC MODULE ÉLECTRONIQUE DE PUISSANCE

(30) Priorität: 20.07.2022 EP 22185971
(43) Veröffentlichungstag der Anmeldung: 26.02.2025
(73) Patentinhaber: Innomotics GmbH, 90441 Nürnberg (DE)
(72) Erfinder: BRÜTTING, Frank, 91054 Erlangen (DE)
(74) Vertreter: Michalski Hüttermann & Partner Patentanwälte mbB
(86) Internationale Anmeldenummer: PCT/EP2023/068524
(87) Internationale Veröffentlichungsnummer: WO 2024/017638

(56) Entgegenhaltungen:
- EP-A1- 3 719 975
- WO-A1-2019/244487
- WO-A1-2022/145195
- DE-A1- 102015 220 112
- DE-A1- 102019 113 237
- US-A1- 2018 180 061

## Beschreibung

Die Erfindung betrifft einen Elektromotor mit Leistungselektronik-Baugruppe und einer ständerseitigen Stabwicklung. Elektromotoren können ständerseitig eine Stabwicklung aufweisen. Dabei weist der Ständer (Stator) eine Reihe von Stäben anstelle von gewickelten Drahtleitern als Feldleiter auf. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich. Ein Motor dieser Bauart ist in der EP 3 719 975 A1 offenbart.

Aus der WO 2019/244487 A1 und der WO 2022/145195 A1 sind weitere Motoren mit einer Leistungselektronik-Baugruppe bekannt.

Dieser hohe Stromfluss erfordert aber durch die geringe Induktivität der Stäbe nur eine vergleichsweise geringe Spannung von beispielsweise 12 V. Die geringe Spannung ermöglicht es, die Komponenten der Wechselrichter, mit denen die Stäbe angesteuert werden, in geringen Abständen zueinander anzuordnen. So können die Module der Leistungselektronik beispielsweise auf einer oder mehreren Platinen (Leiterplatten) angeordnet werden, die nahe am Elektromotor angeordnet werden. Die Stabwicklungen des Motors können dabei direkt oder über elektrisch leitende stabartige Verbindungselemente direkt als mechanischer Träger der Platinen verwendet werden.

Da die Leistungselektronik gekühlt werden muss, werden nach dem Stand der Technik zwei wassergekühlte Kühlplatten beidseitig mit Leistungselektronik bestückt und diese damit gekühlt. Je höher die Ströme ausfallen, desto mehr dieser Kühl- und Leistungselektronik-Scheiben müssen hintereinander kaskadiert werden. Wenn eine Maschine z.B. 96 Phasenstäbe aufweist, besitzt eine Wechselrichter-Scheibe daher 96 Einzel-Wechselrichter (wobei sich jedoch die Elektronik für mehrere Phasen auf einer Platine befinden kann). Wird eine Parallelschaltung von vier Einzelwechselrichtern benötigt, besteht ein vollständiger Wechselrichter aus 384 einzelnen Leistungselektronik-Modulen. Die Kühlplatten und die darauf montierten Leistungselektronik-Module sind mechanisch miteinander verbunden und bilden zusammen eine Leistungselektronik Baugruppe.

Aufbautechnisch werden nach dem Stand der Technik die Leistungselektronik-Module (Leiterplatten) einzeln auf die Kühlkörper verschraubt, um einen guten Anpressdruck zwischen Elektronik und Kühlplatten und damit eine gute Wärmeübertragung garantieren zu können. Dies bedeutet aufgrund der hohen Anzahl an Schrauben jedoch einen hohen Material- und Fertigungsaufwand, sowie Gewindelöcher in den Kühlplatten - welche ebenfalls viele Fertigungsschritte benötigen, sowie die Verlegung der Kühlkanäle innerhalb der Kühlplatten verkomplizieren. Zudem ist der Platz auf den Leistungselektronik-Modulen äußerst begrenzt, weshalb auch hier Schraublöcher inkl. der nötigen Luft- und Kriechstrecken nennenswerten Platz benötigen, sodass weniger Leiterplattenfläche für die Leistungselektronik selbst zur Verfügung steht. Lose Schrauben können weiterhin zu Kurzschlüssen im Wechselrichter führen, weshalb eine Vermeidung derartiger Schrauben auch eine größere Ausfallsicherheit bieten würde.

Der oben genannte Fertigungsaufwand fällt zudem nicht nur bei der Produktion an, sondern auch bei jeder Wartung des Antriebssystems. Das System ist extra derartig ausgelegt, dass (ähnlich wie bei HGÜ-Systemen) eine gewisse Anzahl an Einzelmodulen ohne größere Einschränkungen auf die Betriebsfähigkeit ausfallen kann, und diese Module nach einer gewissen Zeit bei der zyklischen Wartung erneuert werden. Das Lösen und Festschrauben dieser großen Anzahl an Schrauben zieht die Wartung daher enorm in die Länge. Die Aufbau- und Wartungsproblematik an der Leistungselektronik-Baugruppe ist hier exemplarisch für den Stabwicklungsmotor beschrieben, sie kann aber auch bei weiteren Leistungselektronik-Anwendungen, wie bei den erwähnten HGÜ-Anlagen, auftreten.

Die Aufgabe der Erfindung besteht darin, einen Elektromotor mit Leistungselektronik-Baugruppe bereitzustellen, welche gegenüber dem Stand der Technik einen geringen Aufwand beim Aufbau und bei der Wartung aufweist. Ferner besteht die Aufgabe darin, einen Elektromotor bereitzustellen, in den eine entsprechende Leistungselektronik-Baugruppe aufbautechnisch integriert ist.

Die Lösung der Aufgabe besteht in einem Elektromotor mit einer Leistungselektronik-Baugruppe nach Anspruch 1 mit einer Mehrzahl von LeistungselektronikBauteilen, die auf mehreren Leiterplatten angeordnet sind. Dabei sind wenigstens zwei Leiterplatten auf wenigstens zwei parallelen Kühlplatten mit jeweils zwei parallel zueinanderstehenden Kühlflächen vorgesehen, wobei auf einander zugewandten Kühlflächen der Kühlplatten mindestens eine Leiterplatte angeordnet ist. Bei einer optimierten Bauraum-Ausnutzung stehen sich bevorzugt jeweils zwei Leiterplatten an sich aufeinander zugewandten Kühlflächen gegenüber. Die Kühlplatten weisen dabei wiederum jeweils mindestens zwei Durchgangsbohrungen auf, die senkrecht zu den Kühlflächen eingebracht sind. Ferner sind mindestens zwei Stangen vorgesehen, die die Kühlplatten an den Durchgangsbohrungen durchdringen und an den Stangen sind Arretierungsvorrichtungen vorgesehen, die zur Fixierung der Kühlplatte entlang einer Stangenachse dienen. Das heißt die Arretierung fixiert die Kühlplatte mit den darauf angeordneten Leiterplatten entlang der Stangenachse, sodass die Kühlplatten fest zueinander in einem gewissen Abstand angeordnet sind. Ferner sind jeweils zwischen den gegenüberstehenden Leiterplatten Stützstreben angeordnet, wobei mittels der Arretierungsvorrichtung eine Vorspannung entlang der Stangenachse erfolgt, der die Stützstreben entgegenwirken. Somit wird die Vorspannung in umgekehrten Vorzeichen auf die Stützstreben übertragen, wodurch die Leiterplatten an die jeweils gegenüberliegenden Kühlflächen der mindestens zwei Kühlplatten gepresst werden.

Durch die Kombination der Arretierungsvorrichtung und der Stützstreben, die im zusammengebauten Zustand der Leistungselektronik-Baugruppe erhalten bleiben, wird eine Vielzahl von Einzelverschraubungen überflüssig. Die Stützstreben drücken die Leiterplatten auf die Kühlplatten, ohne dass hierfür eine zusätzliche Verschraubung nötig wäre. Auch die Arretierungsvorrichtung kann dabei so ausgestaltet werden, dass bei mehreren Kühlplatten lediglich eine Fixierung beispielweise in Form einer Verschraubung ausreicht. Beim Aufbau oder bei der Wartung der Leistungselektronik-Baugruppe können diese beispielsweise in eine Montagevorrichtung eingesetzt werden und durch das Lösen von wenigen Fixierungen, beispielsweise Schrauben, so zerlegt werden, dass einzelne Leiterplatten ohne großen zeitlichen Aufwand entnommen und ersetzt werden können. Gegenüber dem Stand der Technik reduziert sich somit der Montage- bzw. Wartungsaufwand der Leistungselektronik-Baugruppe erheblich. Ferner sind weniger Schrauben zur Befestigung der Leiterplatten auf den Kühlplatten nötig, was Materialkosten und Montagekosten einspart und einen höheren Gestaltungsfreiraum von Kühlkanälen in den Kühlplatten erlaubt. Dies wiederum führt zu einer effektiveren Kühlung der Baugruppe und erhöht wiederum ihre Leistungsfähigkeit.

Die Kühlplatten, die beispielweise beim Einsatz für einen noch zu beschreibenden Elektromotor bevorzugt ringförmig oder kreisförmig ausgestaltet sind, weisen dabei zwei annähernd parallele Kühlflächen auf. Die Kühlflächen liegen jeweils auf der gegenüberliegenden Seite der Kühlplatte parallel zueinander. Die Kühlflächen selbst können Oberflächenstrukturierungen aufweisen, die beispielsweise zur Aufnahme der Leiterplatten dienen oder die aus kühltechnischen Gründen zweckmäßig sind. Somit muss die Kühlfläche an sich nicht zwingend vollständig eben sein. Sie weist jedoch im Wesentlichen ebene Flächen auf, die bezüglich der gegenüberliegenden Kühlfläche parallel sind.

In einer vorteilhaften Ausgestaltungsform der Erfindung sind die Stützstreben entlang einer Kraft-Wirk-Achse gefedert deformierbar ausgestaltet. Die Federung kann beispielsweise durch Materialelastizität, beispielsweise durch die Verwendung eines Elastomers als Teil der Stützstrebe oder durch mechanische Federelemente, wie beispielsweise eine Spiralfeder oder eine Blattfeder, ausgestaltet sein. Die Kraft-Wirk-Achse der Stützstreben kann in einer zweckmäßigen Form parallel zur Stangenachse und somit parallel zur Wirkachse der aufgebrachten Vorspannung verlaufen. Die Kraft-Wirk-Achse der Stützstrebe kann jedoch auch in einem bestimmten Winkel zu dieser Stangenachse verlaufen, wenn die Stützstrebe beispielsweise in Form von v-förmig oder w-förmig verlaufenden Verstrebungen angebracht ist.

Die Kühlflächen können, wie bereits bei der Definition ihrer Parallelität angedeutet, Fixiermittel zur Fixierung der Leiterplatte bezüglich der Kühlflächen aufweisen. Diese Fixiermittel können Vertiefungen sein, in der die Leiterplatten eingelegt sind, sie können jedoch auch hervorstehende Noppen oder Nuten sein, in denen die entsprechenden Aussparungen in der Leiterplatte analog dem Lego-Prinzip einrasten.

In einer vorteilhaften Ausgestaltungsform der Erfindung weist die Arretierungsvorrichtung der Stangen eine Verschraubung auf. Diese Verschraubung kann so ausgestaltet sein, dass für eine Mehrzahl von Kühlplatten lediglich pro Stange eine Schraube benötigt wird. Dabei weist die Stange bevorzugt zumindest teilweise ein Gewinde auf, auf das eine Mutter zur Ausbildung der Verschraubung aufgesetzt werden kann.

Grundsätzlich können die Arretierungen jedoch auch alternativ durch Verkeilungen anstatt durch Verschraubungen erfolgen, vorteilhaft ist jedoch, dass die Fixierung der Arretierungsvorrichtung lösbar ist. Eine Verkeilung kann beispielsweise durch einen Quersplint erfolgen. Ferner kann eine Arretierung durch das Anpressen eines weiteren Bauteils, beispielsweise eines Lagerschildes erfolgen. Auch eine um die Baugruppe herum verlaufende Spannvorrichtung kann als Teil der Arretierungsvorrichtung dienen. Dabei sind beispielsweise spanngurtartige Vorrichtungen oder schraubzwingenartige Vorrichtungen zweckmäßig. Bei einer spanngurtartigen Vorrichtung wird mindestens ein gurtförmiges oder bandförmiges Bauteil um die Baugruppe gelegt und beispielsweise mit einer Ratsche zusammengezogen, was die Fixierung bewirkt. Alternativ können auch Fixierungen analog einer Schraubzwinge oder Hebelzwinge von außen als Teil der Arretierungsvorrichtung zur Fixierung angebracht sein.

Ferner ist es zweckmäßig, wenn die Arretierungsvorrichtung Abstandshülsen umfasst, die zwischen jeweils zwei Kühlplatten über die Stangen geschoben sind. Diese Abstandshülsen dienen dazu, den Abstand zwischen den jeweiligen Kühlplatten genau einzustellen, wobei durch diese Abstandshülsen eine weitere Verschraubung bzw. eine weitere Mutter an den Kühlplatten eingespart werden kann. Dieses Abstandshülsen-Konzept verhilft dazu, dass möglichst mit einer Fixierung, also mit einer Verschraubung, ausgekommen werden kann.

Eine Alternative zu den Abstandshülsen besteht in einer vorteilhaften Ausgestaltungsform darin, dass die Stangen einen stufenförmig variablen Durchmesser analog eines Stufenbohrers aufweisen. Auf die so ausgestalteten Stangen können die Kühlplatten sukzessive aufgestapelt werden. Dabei ist es zweckmäßig, wenn die Durchgangsbohrungen von einer Kühlplatte zur nächsten Kühlplatte sich entsprechend der stufenförmigen Änderung des Durchmessers der Stange ebenfalls verringern.

Die Stützstreben können auch mit den Stangen oder der Arretierungsvorrichtung konstruktiv zusammenfallen, wenn beispielsweise an den Hülsen oder an den Abstufungen der Stangen Arretierungsmittel angebracht sind, die im Bereich der Durchgangsbohrung eine Erstreckung entlang der Kühlflächen aufweist.

In einer bevorzugten Ausgestaltungsform, insbesondere für die Anwendung in Elektromotoren, sind die Leiterplatten kreis- oder ringsektorförmig ausgestaltet und korrespondieren somit ebenfalls vorteilhaft mit ringförmig oder kreisförmig ausgestalteten Kühlplatten.

Ein wesentlicher ie Bestandteil der Erfindung ist ein Elektromotor mit einem Stator mit einer Mehrzahl von als Stäbe ausgestalteten Feldleitern und einer Leistungselektronik-Baugruppe, wobei die Feldleiter mit der Leistungselektronik-Baugruppe in elektrischer Verbindung stehen.

Der Vorteil eines derartigen Elektromotors besteht darin, dass insbesondere bei dem beschriebenen Stableitermotor mit sehr niedrigen Spannungen und sehr hohen anliegenden Strömen die Leistungselektronik-Baugruppe parallel geschaltet direkt am Motor angeordnet und somit in diesen integriert sein kann. Insbesondere für Motoren dieser Bauart kommen die beschriebenen Vorteile beim Aufbau und der Wartung der Leistungselektronik besonders zum Tragen.

Der beschriebene Elektromotor unterscheidet sich dabei von herkömmlichen Elektromotoren darin, dass der Ständer (Stator) eine Reihe von Stäben anstelle von gewickelten Drahtleitern als Feldleiter aufweist. Die Stäbe weisen im Vergleich zu herkömmlichen Wicklungen eine geringe Induktivität auf. Daher ist für die Erzeugung eines vorgegebenen Magnetfelds ein vergleichsweise hoher Stromfluss erforderlich.

Aus dem Aufbau der Stabwicklung ergeben sich grundlegende Vorteile im Betrieb der Maschine: Durch die segmentweise Steuerbarkeit des magnetischen Flusses zwischen je zwei Feldleitern können weit flexiblere Formen an Magnetfeldern in die Maschine eingeprägt werden, als es mit einer verteilten Wicklung und deren inhärenten Überlagerungseffekten möglich wäre. Hierdurch ergeben sich viele (regelungstechnische) Vorteile im Hinblick auf die Laufeigenschaften der Maschine. Weiterhin zieht der Ausfall einer Phase ((der Ansteuerung) eines Feldleiters) weitaus geringere Folgen nach sich, als es z.B. bei einer doppel-dreiphasigen oder gar normalen dreiphasigen Maschine der Fall wäre. Da diese Effekte zudem von den benachbarten Phasen sehr gut kompensiert werden können, sinkt mit jedem Phasenausfall bei entsprechender Ausregelung fast ausschließlich die Antriebsleistung um nur einen kleinen Bruchteil, ohne die restlichen Eigenschaften nennenswert zu beeinflussen.

Ausgehend von dem beschriebenen Aufbaukonzept des Elektromotors ist es dabei erfindungsgemäß, dass die Stangen der Leistungselektronik-Baugruppe in Form von mit den Feldleitern elektrisch verbundenen Stromleitern ausgestaltet sind. Das heißt, dass die starren Feldleiter des Elektromotors ebenfalls wiederum direkt und fest mittels der Stangen stromführend mit der Leistungselektronik-Baugruppe verbunden sind. Somit übernehmen die Stangen, die einerseits für den vorteilhaften Aufbau der Leistungselektronik-Baugruppe dienen, gleichzeitig die Funktion der Stromleitung der Baugruppe zu den Feldleitern des Elektromotors. Hierfür ist zweckmäßigerweise wiederum eine Befestigungsvorrichtung beispielsweise in Form eines Befestigungsschuhs zwischen den Feldleitern und den Stangen (Stromleitern) zweckmäßig. Auf diese Weise kann die Leistungselektronik-Baugruppe direkt und fest am Elektromotor angeordnet sein und gegebenenfalls in einem gemeinsamen Gehäuse integriert sein.

Die Leistungselektronik-Bauteile der Baugruppe dienen dabei zur Ansteuerung der Feldleiter. Sie sind dabei entlang der einzelnen Kühlplatten und entlang einer Motorachse parallel geschaltet, sodass die Leistungselektronik-Baugruppe jeden Feldleiter mit einer eigenen Phase ansteuern kann. Ferner ist es dabei zweckmäßig, wenn die Kühlplatten senkrecht zu der Achse des Motors, also zur Motorachse, angeordnet sind. Somit kann der Aufbau des Elektromotors gemeinsam mit der Leistungselektronik-Baugruppe besonders platzsparend ausgestaltet sein.

Weitere Ausgestaltungsformen der Erfindung und weitere Merkmale werden anhand der folgenden Figuren näher erläutert. Merkmale mit einer Bezeichnung, die in unterschiedlichen Ausgestaltungsformen dargestellt sind, werden dabei jeweils mit denselben Bezugszeichen versehen. Es handelt sich bei den Darstellungen um rein schematische Darstellungen, die keine Einschränkung des Schutzbereichs darstellen.

Dabei zeigen:
- Figur 1: einen Elektromotor mit Stableiterwicklung und einer daran angeschlossenen Leistungselektronik-Baugruppe,
- Figur 2: den Elektromotor in Frontansicht,
- Figur 3: eine vergrößerte Darstellung aus Figur 1 im Ausschnitt der Leistungselektronik-Baugruppe in Seitenansicht,
- Figur 4: eine schematische Darstellung des Aufbaukonzeptes der Leistungselektronik-Baugruppe mit Stangen und Stützstreben,
- Figur 5: eine analoge Darstellung zu Figur 4, bei der die Leiterplatten in mehreren Ebenen für einzelne Module zusammengestapelt sind,
- Figur 6: eine schematische Darstellung einer Verschraubung der Arretierungsvorrichtung endseitig der Leistungselektronik-Baugruppe,
- Figur 7: eine schematische Darstellung einer Stange mit stufenförmig reduziertem Durchmesser und
- Figur 8: eine schematische Darstellung einer alternativen Ausgestaltungsform der Stützstreben.
- Figur 9: eine Baugruppe mit Stützstreben, die Teil der Arretierungsvorrichtung sind,
- Figur 10: eine Baugruppe mit spanngurtartiger Fixierung der Arretierungsvorrichtung,
- Figur 11: eine Baugruppe mit schraubzwingenartiger Fixierung der Arretierungsvorrichtung

In den folgenden Figuren wird der vorteilhafte Aufbau einer Leistungselektronik-Baugruppe beschrieben, die wiederum bevorzugt in einen Stableitermotor integriert ist. Hierbei handelt es sich um eine besonders geeignete Anwendung, wobei diese allerdings auch auf andere Anwendungen z. B. im Hochspannungs-Gleichspannungs-Übertragungs-Bereich (HGÜ) übertragen werden kann.

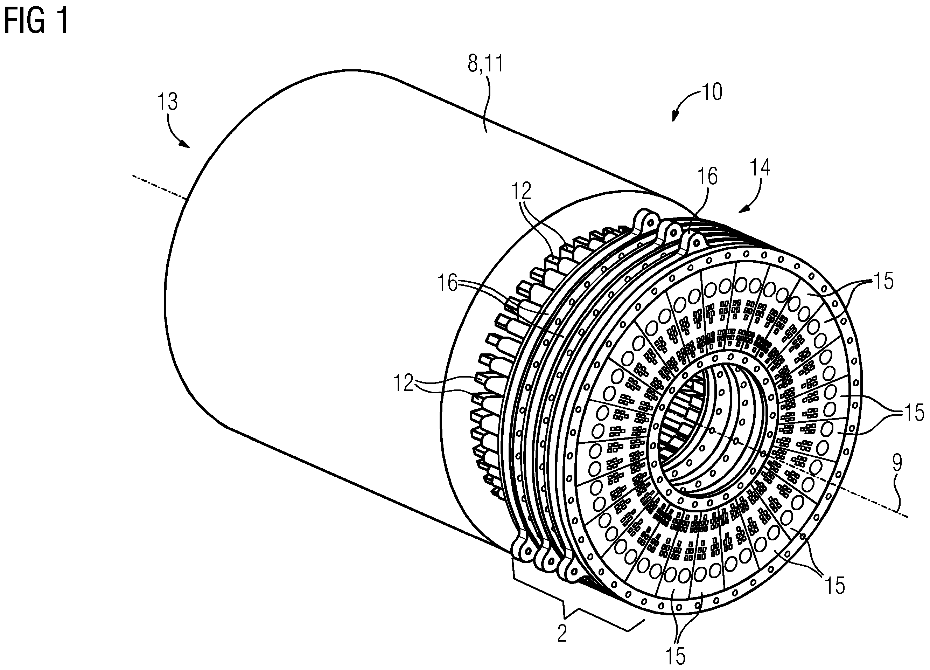

Figur 1 stellt eine isometrische Ansicht eines Elektromotors 10 dar, der ein Ausführungsbeispiel für die Erfindung ist. Der Elektromotor 10 umfasst einen Stator 11 und einen im Wesentlichen im Stator 11 angeordneten Rotor, der in Figur 1 nicht sichtbar ist. Der Rotor ist drehfest mit einer Welle verbunden, die ebenfalls in Figur 1 nicht dargestellt ist. Durch elektromagnetische Wechselwirkung des Rotors mit einem bestromten Stator 11 wird der Rotor um eine Achse 9 in Drehung versetzt. Der Rotor ist dabei vom Stator 11 durch einen Luftspalt getrennt.

In anderen Ausführungsformen kann es sich bei dem Elektromotor 10 auch um einen Außenläufermotor oder Glockenankermotor handeln.

Der Stator 11 umfasst als Feldleiter eine Mehrzahl von starren und geraden Leiterstäben 12. Diese Leiterstäbe 12 sind auf der in Figur 1 abgewandten Stirnseite 13 über einen Kurzschlussring miteinander verbunden. Auf der Rückseite 14 des Elektromotors 10 werden die Leiterstäbe 12 durch jeweils zugehörige Wechselrichtermodule einzeln gespeist. Die Wechselrichtermodule sind Teile einer Leistungselektronik-Baugruppe 2. Da es sich bedingt durch die Leiterstäbe 12 um einen bei niedrigen Spannungen betriebenen Elektromotor 10 handelt, können die Wechselrichtermodule zusammen mit anderen Komponenten der Elektronik (Gleichspannungswandler, Gleichrichter) verhältnismäßig eng zusammen auf Leiterplatten 15 angeordnet sein. Die Leiterplatten 15 sind dabei in diesem Beispiel ringsektorförmig und viele einzelne Platinen 15 bilden zusammen eine ringförmige Platinenstruktur aus. Die starr ausgebildeten Leiterstäbe können dabei aus einem metallischen Stab, beispielsweise einem Kupferstab oder durch einen festen Multifilamentleiter ausgebildet sein.

Während in den Beispielen davon ausgegangen wird, dass die Platinen 15 Wechselrichtermodule tragen, ist es auch möglich, dass ein Teil der Platinen 15 Gleichrichter und DC/DC-Wandler tragen.

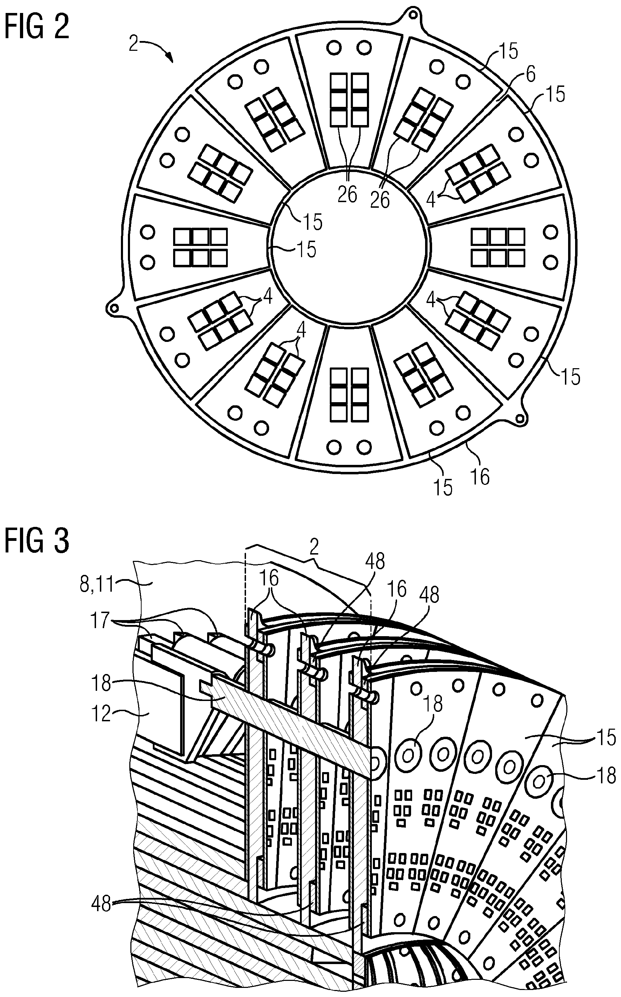

Figur 2 zeigt eine Aufsicht auf eine solche Platinenstruktur mit einzelnen Leiterplatten 15. Die Anzahl der in Figur 2 dargestellten Leiterplatten 15 ist dabei für eine bessere Übersichtlichkeit gegenüber dar Darstellung in Figur 1 verringert und stark vereinfacht dargestellt. Die konkrete Anzahl an solchen Leiterplatten 15 hängt von der konkreten Ausgestaltung des Elektromotors 10 ab, insbesondere der Anzahl der Leiterstäbe 12. Jede der Leiterplatten 15 umfasst mehrere Leistungselektronikbauteile, insbesondere Halbleiterschalter.

Weiterhin kann ein Teil der Platinen 15 oder alle Platinen 15 in den Figuren nicht dargestellte Treiberschaltungen und andere elektronische Komponenten wie Kondensatoren umfassen. Die Halbleiterschalter 26 sind Leistungshalbleiter wie beispielsweise IGBTs, MOSFETs oder JFETs und können abhängig von der Verschaltung zusätzlich nicht gezeigte Dioden umfassen. Die Halbleiterschalter 26 sind beispielsweise als Halbbrücken verschaltet. Ein nicht gezeigter Kondensator kann beispielsweise einen Zwischenkreiskondensator der Halbbrücken darstellen. Die Halbleiterschalter 26 einer Platine 15 können dabei einer einzelnen Phase zugeordnet sein oder aber mehreren Phasen.

Die Leiterplatten 15 umfassen weiterhin Kontaktstellen 40, an denen die Leiterstäbe 12 angeschlossen sind. Die Platinen 15 werden von scheibenförmigen Kühlplatten 16 getragen, wobei für eine bessere Platzausnutzung die Kühlplatten 16 beidseitig mit Platinen 15 belegt sein können.

Da bei dem Elektromotor 10 gegenüber herkömmlichen Motoren mit Wicklungen verhältnismäßig hohe Ströme in den Leiterstäben 12 nötig sind, sind bevorzugt mehrere Wechselrichter zu deren Bestromung parallelgeschaltet. Dies kann beispielsweise dadurch erreicht werden, dass die in Figur 1 gezeigten sechs Platinenstrukturen auf drei Kühlplatten 16 alle gleichartig an die Leiterstäbe 12 angeschlossen sind und somit elektrisch parallel angebunden sind. Dabei wird ausgenutzt, dass die Leiterstäbe 12 oder Verbindungselemente 18 zu den Leiterstäben 12 die Kühlplatten 16 und damit auch die Platinen 15 gleichartig an den Kontaktstellen durchdringen oder im Falle der äußersten Kühlplatte 16 zumindest kontaktieren.

Figur 3 zeigt ein Schnittbild des Elektromotors 10 in Schrägansicht. Hierbei ist zu erkennen, dass die Verbindungselemente 18 die drei Kühlplatten 16 mechanisch tragen und durchdringen. Die Verbindungselemente 18 sind über Befestigungsvorrichtungen 17 mit den Leiterstäben 12 verbunden. Die Wechselrichter, die auf den Leiterplatten 15 in den Bereichen liegen, in denen eines der Verbindungselemente 18 eine Kühlplatte 16 durchdringt, sind parallelgeschaltet und stellen gemeinsam den Strom für den Leiterstab 12 bereit.

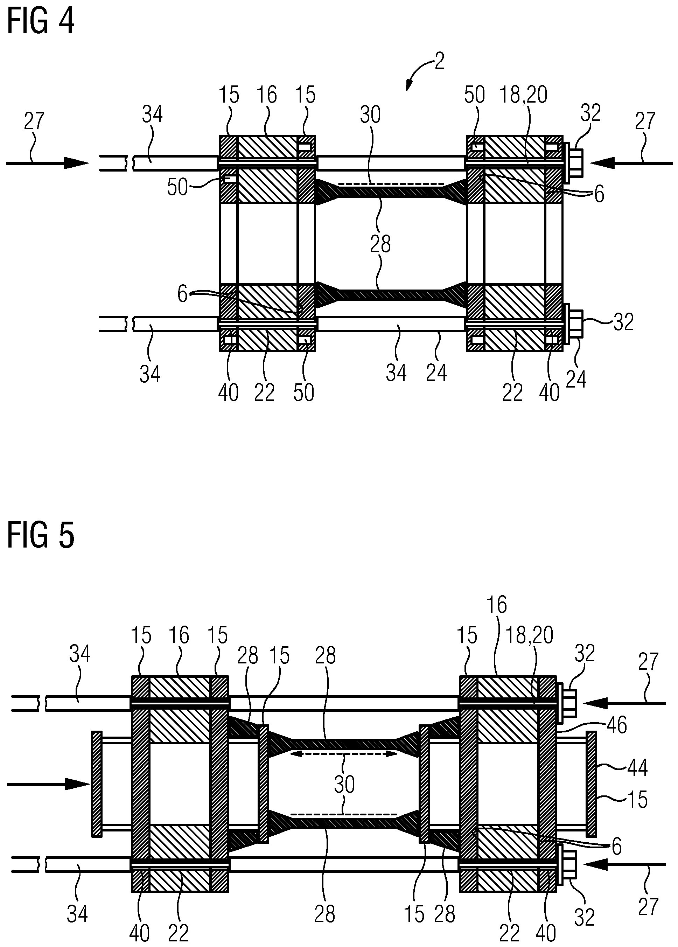

An den Beispielen des beschriebenen Elektromotors 10 mit einer Stabwicklung ist insbesondere in Figur 3 zu erkennen, wie komplex der Aufbau der Leistungshalbleiter-Baugruppe ausgestaltet ist. Die Kühlplatten 16, die Leiterplatten 15, Verbindungselemente 18 zur Stromführung und gegebenenfalls Stromschienen 48 zur Kontaktierung der Leiterplatten werden einzeln miteinander verschraubt und zusammengesetzt. Im Erstaufbau und bei der Wartung der Leistungselektronik-Baugruppe bedeutet dies einen sehr hohen Montageaufwand. In Figur 4 ist ein Beispiel dafür gegeben, wie dieser Montageaufwand bei der Leistungselektronik-Baugruppe 2 erheblich reduziert werden kann. Die Leistungselektronik-Baugruppe 2 gemäß Figur 4, die hier zur besseren Darstellung sehr schematisiert und vereinfacht abgebildet ist, weist dabei zwei Kühlplatten 16 auf, an deren Kühlflächen 6 Leiterplatten 15 anliegen. Der Begriff "anliegen" bedeutet hierbei, dass die Leiterplatten 15 nicht notwendigerweise an den Kühlflächen 6 fixiert sein müssen.

Es ist durchaus möglich, dass diese lediglich präzise an der richtigen Position angelegt werden. Grundsätzlich ist es aber auch zweckmäßig, wenn Fixiermittel 50 vorgesehen sind, die eine genaue Positionierung und eine Vorfixierung der Leiterplatten 15 auf den Kühlflächen 6 gewährleisten. Bei dem Fixiermittel 50 kann es sich beispielsweise um Vertiefungen handeln, in denen die Leiterplatten 15 eingelegt werden oder es handelt sich um Noppen, die wiederum in die Aussparungen der Leiterplatten 15 eindringen. Eine Verschraubung der Leiterplatten 15 auf den Kühlflächen 6 ist jedoch nach dieser Ausgestaltung nicht nötig. Dies bewirkt, dass weniger Aufwand bei der Montage bzw. auch bei der Demontage der Leiterplatten 15 betrieben werden muss. Die Leiterplatten 15 werden demnach durch die Stützstreben 28 während der Montage und auch im montierten Zustand an die Kühlfläche 6 und somit an die Kühlplatte 16 gepresst.

Hierzu ist jedoch eine entsprechende Anpresskraft nötig, die in Figur 4 durch die Kraftpfeile mit den Bezugszeichen 27 skizziert ist. Hierbei handelt es sich um eine Vorspannung auf Stangen 20, die durch die einzelnen Kühlplatten 16 und dort durch Durchgangsbohrungen 22 hindurchgeführt sind und in dem Beispiel nach Figur 4 an einer äußersten Kühlplatte 16 durch eine Verschraubung 32 verschraubt sind. Dabei sind die Stangen 20 als metallische Stangen ausgestaltet, wobei in dem Zwischenraum zwischen zwei Kühlplatten 16 eine Abstands-Hülse 34 über die Stange 20 geschoben ist, die aufgrund ihrer definierten Länge einen definierten Abstand zwischen den Platten 16 bzw. den darauf fixierten Leiterplatten 15 gewährleistet.

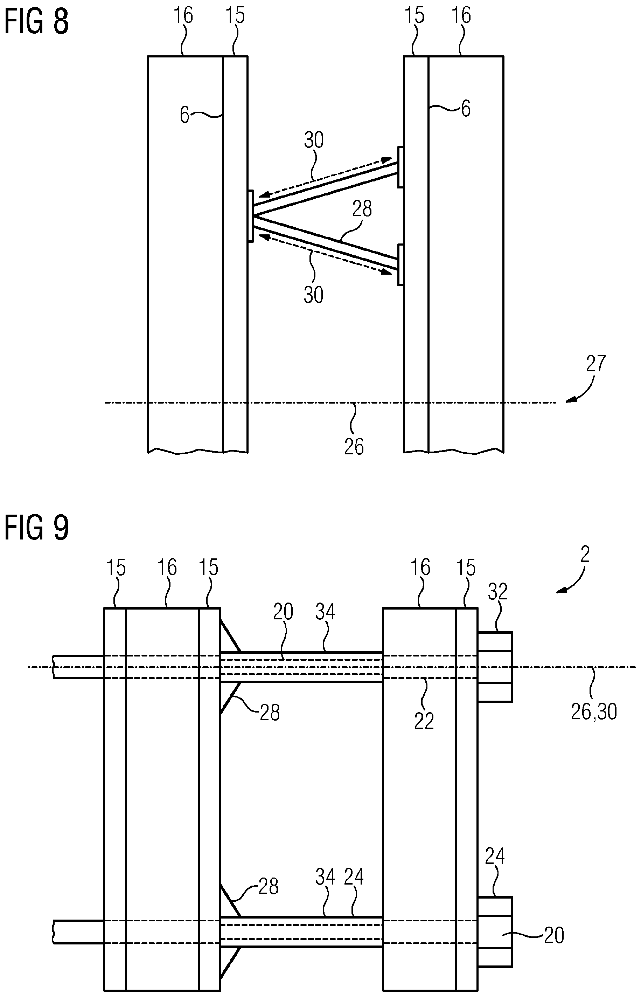

Da die Abstandshülse 34 einen größeren Durchmesser als die Durchgangsbohrungen 22 aufweist, wird durch Anziehen der Verschraubung 32 die Vorspannung 27 auf den Zusammenbau der beschriebenen Kühlplatten 16 erzielt. Die Vorspannung 27 wird hierdurch mit umgekehrtem Vorzeichen auf Stützstreben 28 übertragen, die als direkte Wirkung die Leiterplatten 15 an die Kühlflächen 6 drücken. Dabei ist eine Kraft-Wirk-Achse 30 definiert, die in Figur 4 parallel zu einer Stangenachse 26 verläuft. Die Stangenachse 26 wiederum entspricht der Wirkrichtung der Kraft 27. Die Kraft-Wirk-Achse 30 der Stützstreben 28 kann jedoch auch in einem Winkel zu der Stangenachse 26 stehen, wie dies in Figur 8 schematisch veranschaulicht ist.

Der in Figur 4 schematisch veranschaulichte Aufbau der Leistungselektronik-Baugruppe 2 zeigt also, dass eine nahezu beliebige Anzahl von Kühlplatten mit darauf anliegenden Leiterplatten 15 nebeneinander oder aufeinander gestapelt werden können. Für die Konstruktion, wie sie in Figur 4 dargestellt ist, ist lediglich eine Verschraubung 32 nötig. Diese Verschraubung 32 bildet mit den Abstands-Hülsen 34 die Arretierungsvorrichtung 24.

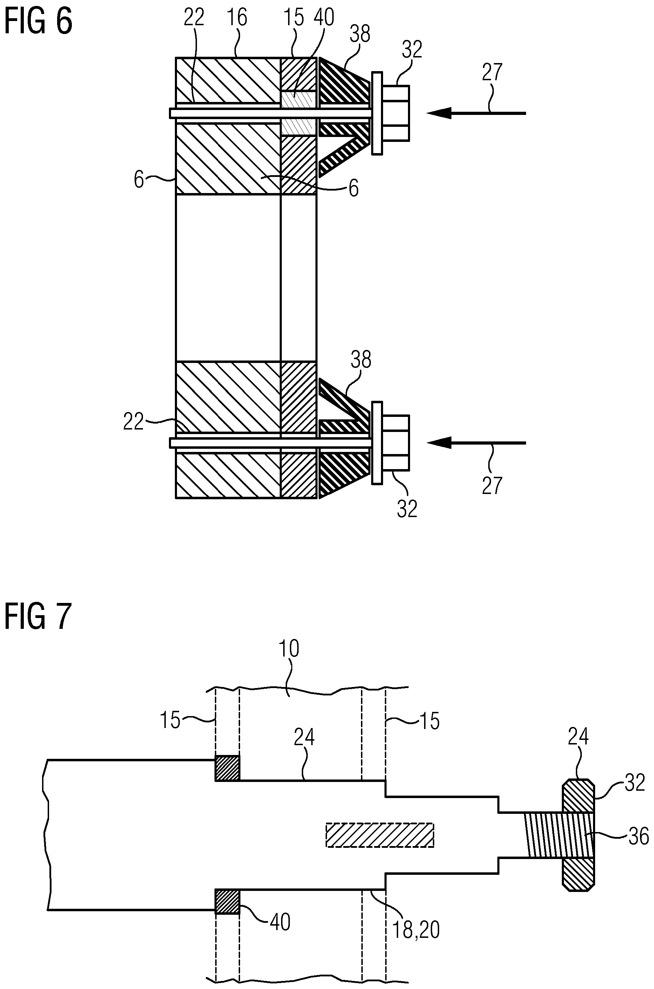

Eine alternative Ausgestaltungsform der Arretierungsvorrichtung 24 ist in Figur 7 dargestellt. Hier gibt es eine Verschraubung 32, wobei die Stange 20 endseitig ein Gewinde 36 aufweist, was so weit analog zu Figur 4 ausgestaltet ist. Die Stange 20 gemäß Figur 7 weist jedoch keine Abstands-Hülsen 34 auf, vielmehr wird der konstante Abstand zwischen zwei Kühlplatten 16 durch eine stufenförmige Verjüngung entlang der Stangenachse 26 umgesetzt. Dafür ist es notwendig, dass die Durchgangsbohrungen 22 der einzelnen Kühlplatten 16 entlang der Stangenachse 26 sich ebenfalls entsprechend von dem Durchmesser verkleinern, sodass die jeweilige Stufe der Stange 20 an der Leiterplatte 15 und dort bevorzugt an einer Kontaktierungsstelle, die ebenfalls elektrisch leitend ist, anliegt. Die in Figur 7 beschriebene Ausgestaltungsform ist zwar technisch etwas aufwändiger als die Arretierungsvorrichtung 24 gemäß Figur 4, durch das Aufbringen der Vorspannung 27 ist es jedoch möglich durch diese Ausgestaltungsform einen wirksameren elektrischen Kontakt zwischen der Stange 20 und der Kontaktierung 40 zu erzielen.

Die gerade beschriebene Kontaktierung 40 zwischen der Stange 20 und der Leiterplatte 15 hat ihre Bedeutung darin, dass die Stange 20 gleichzeitig die Verbindungselemente 18, wie sie in der Figur 3 detailliert dargestellt sind, darstellt. Die in den Figuren 4 bis 8 schematisch dargestellte Arretierungsvorrichtung 24 ist in dieser Form in der Figur 3 nicht dargestellt. In Figur 3 ist hierzu auch zu erkennen, wie über eine Befestigungsvorrichtung 17 das elektrisch leitende Verbindungselement 18 mit den Leiterstäben 12 des Elektromotors 10 elektrisch leitend verbunden ist. Die Verbindungselemente 18 und somit die Stangen 20 dienen also zur Stromversorgung des Leiterstabes 12. Die Leistungselektronik-Baugruppe 2, wie sie in den Figuren 4 bis 8 beschrieben ist, nimmt dies auf und nutzt die Verbindungselemente 18, die zur Stromzufuhr und zur Steuerung der Stäbe 20 nötig sind, als Stangen 20 zur vorteilhaften Montage der Baugruppe 2, wie sie in Figur 4 und in Figur 5 beschrieben ist. Die Leistungselektronik-Baugruppe 2 kann somit direkt an den Elektromotor 10 bzw. dessen Leiterstäbe 12 angesetzt werden und ist somit ein integraler Bestandteil des Elektromotors 10. Sie kann gegebenenfalls auch in einem Gehäuse, das hier nicht dargestellt ist, zusammen mit dem Elektromotor 10 untergebracht sein.

Hieraus geht hervor, dass es zweckmäßig ist, für jeden Leiterstab ein Verbindungselement 18 bzw. eine Stange 20 mit jeweils einer Fixiervorrichtung 24 bereitzustellen. Die Leistungselektronik-Baugruppe 2, die rotationssymmetrisch aufgebaut ist, sitzt durch diese Anordnung auf der Achse 9 des Elektromotors 10. Entlang bzw. parallel zu dieser Achse verlaufen auch die Verbindungselemente 12. Die Leiterplatten 16, die jeweils mit einem Verbindungselement 12 parallelgeschaltet sind, dienen dabei zur Ansteuerung eines Stapels 12. Durch diese Parallelschaltung können hohe Ströme bei niedriger Spannung direkt an den Leiterstapel 12 weitergeleitet werden. Ferner kann jeder Stapel 12 auch als einzelne Phase einzeln angesteuert werden.

Dabei umfassen die Leiterplatten 15 verschiedene Leistungselektronik-Bauelemente. Dabei ergeben sogenannte Gate-Treiber 44 und Endstufen 46 zusammen ein Leistungsteil. Eine Mehrzahl an Leistungsteilen mit Steuerungen ergeben wiederum einen Wechselrichter. Diese Bauelemente bzw. Bauelementmodule können in einer Leiterplatte 15 integriert sein, sie können jedoch auch mehrstufig bzw. in mehreren Ebenen aufgebaut sein. Ein derartiger schichtweiser Aufbau von Leiterplatten 15 ist in Figur 5 dargestellt. Hierbei ist z. B. der Gate-Treiber 44 in einer anderen Leiterplatte 15 angeordnet als die Endstufe 46. Diese beiden Leiterplatten 15 sind übereinander angeordnet, was bei dem Aufbau der Leistungselektronik-Baugruppe 2 gemäß Figur 5 analog gelöst wird wie in Figur 4, lediglich sind ggf. weitere, kleinere Stützstreben 28 erforderlich, die die übereinander geschichteten Leiterplatten 15 gegeneinander abstützen.

Dabei ist es für die Stützstreben 28 in Figur 5 wie auch in Figur 4 zweckmäßig, dass diese entlang ihrer Kraft-Wirk-Achse 30 federnd deformierbar sind. Dies ist nützlich, um mögliche Toleranzen im gesamten Aufbau auszugleichen und eine Beschädigung der Leiterplatten 15 zu verhindern. Dabei können die federnden Elemente materialbedingt sein, beispielsweise können Elastomere als Federelemente verwendet werden, es können jedoch auch separate Federelemente wie Schraubenfedern oder Blattfedern eingesetzt werden.

In Figur 6 ist ein Beispiel für eine endseitige Befestigung der Verschraubung mit einer besonderen Ausgestaltungsform dargestellt. Auch hier ist es zweckmäßig, dass zur Vermeidung von Biegespannungen auf den Leiterplatten 15 federnde Elemente, hier in Form von Endstreben 38, eingesetzt werden, um die Leiterplatten 15 an die Kühlflächen 6 zu drücken. Dies könnte grundsätzlich auch durch die Verschraubung 32 erfolgen. Zur Sicherung der Stabilität der Leiterplatten 15 und für eine flächigere/gleichmäßigere Kraftverteilung ist die Anordnung der Endstrebe zweckmäßig.

Die endseitige Fixierung der Fixiervorrichtung 24, die beispielsweise in Figur 6 mit der Verschraubung 32 realisiert ist, kann jedoch auch alternativ mit einer Verspannung der Stange 20 am Lagerschild des Elektromotors 10, das in der Figur nicht dargestellt ist, erfolgen. Das Lagerschild ist in der Regel auch auf das Gehäuse des Elektromotors 10 aufgeschraubt, sodass auch hier indirekt von einer Verschraubung als Bestandteil der Fixiervorrichtung 24 gesprochen werden kann.

Ferner ist anzumerken, dass Stromschienen 48, wie sie in Figur 3 dargestellt sind und in den Figuren 4 bis 8 der Übersichtlichkeit halber nicht eingezeichnet sind, zwischen der Kühlplatte 16 und den Leiterplatten 15 in hier nicht dargestellten Vertiefungen der Kühlplatte 16 angeordnet sein können. Diese Stromschienen 48 werden durch die beschriebene Vorspannung 27 der Arretierungsvorrichtung 24 ebenfalls durch einen bestimmten Anpressdruck mit einer hier ebenfalls nicht dargestellten Kontaktierung in der Leiterplatte 15 kontaktiert. Auch für diese Stromschienen 48 ist gegebenenfalls keine extra Verschraubung notwendig, wie dies nach Ausgestaltungen des Standes der Technik erforderlich ist.

Das beschriebene Konzept zum Aufbau bzw. zur Wartung von Leistungselektronik-Baugruppen 2 zeigt also eine deutlich geringere Anzahl von nötigen Verschraubungen gegenüber dem Stand der Technik, was dazu führt, dass der Aufbau durch die Demontage weniger Schrauben gelöst und wieder zusammengebaut werden kann. Der Montageaufwand ist somit deutlich geringer als dies Konstruktionen aus dem Stand der Technik lehren. Ferner kann bei Bedarf eine defekte Leiterplatte bzw. ein defektes Leistungselektronikmodul aus der Baugruppe 2 ausgetauscht werden.

In Figur 9 ist eine Leistungselektronik-Baugruppe 2 schematisch im Querschnitt dargestellt, bei der die Stützstreben 28 als Teil der Hülsen 34 ausgestaltet sind. Die Stützstreben sind somit in die Arretierungsvorrichtung integriert und weisen in der Kühlflächenebene eine flächige Verbreiterung zur Abstützung der Leiterplatten 15 auf. In dieser Figur ist exemplarisch bei gegenüberliegenden Kühlflächen 6 die Leiterplatte so angeordnet, dass sie keiner weiteren Leiterplatte 15 direkt gegenübersteht. Zur Optimierung des zur Verfügung stehenden Bauraums werden jedoch in der Regel gegenüberstehende Leiterplatten 15 angeordnet.

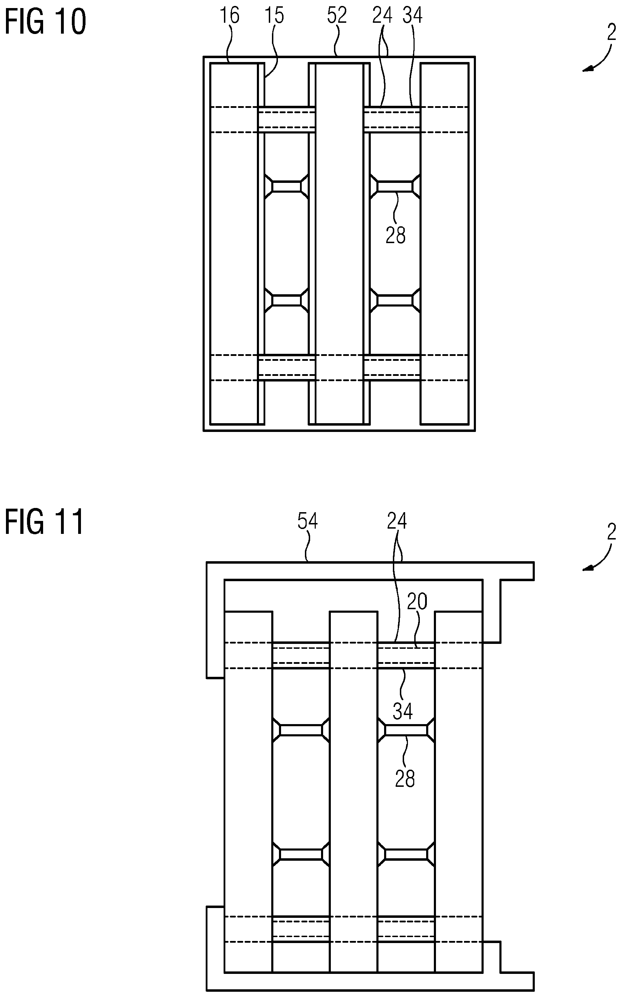

In Figur 10 ist ein Beispiel gegeben, wie eine spanngurtartige Arretierung der Kühlplatten 16 der Baugruppe 2 zusammen Teil der Arretierungsvorrichtung 24 sein kann. Hierbei werden als weiterer Teil der Arretierungsvorrichtung 24 die Hülsen 34 wie beschrieben verwendet. Ferner wird ein spanngurtartiges Band 52 um die Baugruppe 2 gelegt und mittels einer nicht näher dargestellten Ratsche festgezurrt, also arretiert.

Alternativ kann die Arretierung auch mit einer schraubzwingenartigen Fixierung, wie sie in Figur 11 schematisch dargestellt ist, erfolgen. Hierzu wird eine Schraubzwinge 54 oder eine Hebelzwinge entlang der Stangenachse 26 angelegt und die Baugruppe 2 fixiert. Auch Kombinationen der Darstellungen aus den Figuren 4 bis 11 sind zweckmäßig.

### Bezugszeichenliste

- 2: Leistungselektronik-Baugruppe
- 4: Leistungselektronik-Bauteile
- 6: Kühlflächen
- 8: Stator/Rotor-Block
- 9: Motorachse
- 10: Elektromotor
- 11: Stator
- 12: Leiterstäbe
- 13: Stirnseite
- 14: Rückseite
- 15: Leiterplatten
- 16: Kühlplatte
- 17: Befestigungsvorrichtung
- 18: Verbindungselement
- 20: Stangen
- 22: Durchgangsbohrungen
- 24: Arretierungsvorrichtung
- 26: Stangenachse
- 27: Vorspannung
- 28: Stützstreben
- 30: Kraft-Wirk-Achse
- 32: Verschraubung
- 34: Hülsen
- 36: Gewinde
- 38: Endstreben
- 40: Kontaktierung
- 42: Verbindungsgewinde
- 44: Gate-Treiber
- 46: Endstufe
- 48: Stromschienen
- 50: Fixierung Leiterplatte
- 52: spanngurtartige Arretierung
- 54: schraubzwingenartige Arretierung

## Patentansprüche

1. Elektromotor (10) mit:
- einem Stator (11) mit einer Mehrzahl von als Stäbe ausgestalteten Feldleitern (12) und einer Leistungselektronik-Baugruppe (2) mit
- einer Mehrzahl von Leistungselektronikbauteilen (4),
- die auf mehreren Leiterplatten (15) angeordnet sind, wobei
- wenigstens zwei Leiterplatten (15) auf wenigstens zwei parallel zueinander angeordneten Kühlplatten (16) mit jeweils zwei parallel zueinander stehenden Kühlflächen (6) angeordnet sind,
- sodass auf einander zugewandten Kühlflächen der Kühlplatten mindestens eine Leiterplatte angeordnet ist
- die Kühlplatten (16) jeweils mindestens zwei Durchgangsbohrungen senkrecht zu den Kühlflächen (6) aufweisen,
- wobei mindestens zwei Stangen (20) vorgesehen sind, die die Kühlplatten (16) an den Durchgangsbohrungen (22) durchdringen und an den Stangen (20) Arretierungsvorrichtungen (24) zur Fixierung der Kühlplatten (16) entlang einer Stangenachse (26) vorgesehen sind und dass
- zwischen jeweils zwei gegenüberstehenden Leiterplatten (16) Stützstreben (28) angeordnet sind und
- mittels der Arretierungsvorrichtung (24) eine Vorspannung entlang der Stangenachsen (26) erfolgt, der die Stützstreben (28) entgegenwirken und hierdurch die Leiterplatten (15) an die gegenüberliegenden Kühlflächen (6) der jeweils zwei Kühlplatten (16) pressen
- wobei die Feldleiter (12) mit der Leistungselektronik-Baugruppe (2) in elektrischer Verbindung stehen und
- die Stangen (20) der Leistungselektronik-Baugruppe (2) in Form von mit den Feldleitern (12) elektrisch verbundenen Stromleitern (18) ausgestaltet sind.

2. Elektromotor nach Anspruch 1, **dadurch gekennzeichnet, dass** die Stützstreben (28) entlang einer Kraft-Wirk-Achse (30) der Stützstrebe (28) gefedert deformierbar ausgestaltet ist.

3. Elektromotor nach Anspruch 1 oder 2, **dadurch gekennzeichnet, dass** an den Kühlflächen (6) Fixiermittel (50) zur Fixierung der Leiterplatte (15) bezüglich der Kühlflächen (6) vorgesehen sind.

4. Elektromotor nach einem der vorhergehenden Ansprüche, **dadurch gekennzeichnet, dass** die Arretierungsvorrichtung (24) der Stangen (20) eine Verschraubung (32) umfasst.

5. Elektromotor nach Anspruch 4, **dadurch gekennzeichnet, dass** die Stangen (20) zumindest teilweise mit einem Gewinde versehen sind.

6. Elektromotor nach einem der vorhergehenden Ansprüche, **dadurch gekennzeichnet, dass** die Arretierungsvorrichtung (24) Abstandshülsen (34) umfasst, die zwischen jeweils zwei Kühlplatten (16) über die Stangen (20) geschoben sind.

7. Elektromotor nach einem der Ansprüche 1 bis 5, **dadurch gekennzeichnet, dass** die Stangen (20) einen stufenförmig variablen Durchmesser aufweisen

8. Elektromotor nach einem der vorhergehenden Ansprüche, bei dem die Leiterplatten (15) kreis- oder ringsektorförmig ausgestaltet sind und die Kühlplatten (16) ringförmig oder kreisförmig ausgestaltet sind.

9. Elektromotor nach einem der Ansprüche 1 bis 8, **dadurch gekennzeichnet, dass** die Stangen (20) der Leistungselektronik-Baugruppe (2) direkt mittels einer Befestigungsvorrichtung (17) an die Feldleiter (12) angebunden sind.

10. Elektromotor nach einem der Ansprüche 1 bis 9, **dadurch gekennzeichnet, dass** die Leistungselektronikbauteile (4) zur Ansteuerung der Feldleiter (12) ausgestaltet sind.

11. Elektromotor (10) nach einem der Ansprüche 1 bis 10, bei dem die Kühlplatte (16) senkrecht zur Achse (9) des Elektromotors (10) angeordnet ist.

12. Elektromotor (10) nach einem der Ansprüche 1 bis 11, **dadurch gekennzeichnet, dass** die Leistungselektronik-Baugruppe (2) ausgestaltet ist, jeden der Feldleiter (12) mit einer eigenen Phase anzusteuern.

## Claims

1. An electric motor (10), having:
- a stator (11) having a plurality of field conductors (12) configured as bars and a power electronics module (2) having
- a plurality of power electronics components (4),
- which are arranged on a plurality of circuit boards (15), wherein
- at least two circuit boards (15) are arranged on at least two cooling plates (16) arranged parallel to one another, each with two cooling surfaces (6) arranged parallel to one another,
- so that at least one circuit board is arranged on mutually facing cooling surfaces of the cooling plates,
- the cooling plates (16) each have at least two through holes perpendicular to the cooling surfaces (6),
- wherein at least two rods (20) are provided which penetrate the cooling plates (16) in the through holes (22) and locking devices (24) are provided on the rods (20) for fixing the cooling plates (16) along a rod axis (26), and that
- support struts (28) are arranged between two mutually opposed circuit boards (16), and
- by means of the locking device (24), a pre-tension along the rod axes (26) results which the support struts (28) counteract and thereby press the circuit boards (15) against the opposing cooling surfaces (6) of the two cooling plates (16) in each case
- wherein the field conductors (12) are electrically connected to the power electronics module (2) and
- the rods (20) of the power electronics module (2) are configured in the form of current conductors (18) electrically connected to the field conductors (12).

2. The electric motor as claimed in claim 1, **characterized in that** the support struts (28) are configured to be able to be resiliently deformed along a force action axis (30) of the support strut (28).

3. The electric motor as claimed in claim 1 or 2, **characterized in that** fixing means (50) are provided on the cooling surfaces (6) for fixing the circuit board (15) in relation to the cooling surface (6).

4. The electric motor as claimed in one of the preceding claims, **characterized in that** the locking device (24) of the rods (20) comprises a screw fixing (32).

5. The electric motor as claimed in claim 4, **characterized in that** the rods (20) are provided at least partially with a thread.

6. The electric motor as claimed in one of the preceding claims, **characterized in that** the locking device (24) comprises spacing sleeves (34) which are inserted over the rods (20) between two cooling plates (16) in each case.

7. The electric motor as claimed in one of claims 1 to 5, **characterized in that** the rods (20) have a stepped variable diameter.

8. The electric motor as claimed in one of the preceding claims, wherein the circuit boards (15) are configured to be circular or annular segmental and the cooling plates (16) are configured to be annular or circular.

9. The electric motor as claimed in one of claims 1 to 8, **characterized in that** the rods (20) of the power electronics module (2) are directly connected by means of a fastening device (17) to the field conductors (12).

10. The electric motor as claimed in one of claims 1 to 9, **characterized in that** the power electronics components (4) are configured for driving the field conductors (12).

11. The electric motor (10) as claimed in one of claims 1 to 10, wherein the cooling plate (16) is arranged perpendicularly to the axis (9) of the electric motor (10).

12. The electric motor (10) as claimed in one of claims 1 to 11, **characterized in that** the power electronics module (2) is configured for driving each of the field conductors (12) with its own phase.

## Revendications

1. Moteur électrique (10) comprenant :
- un stator (11) ayant une pluralité de conducteurs de champ (12) réalisés sous forme de barres et un module électronique de puissance (2) comprenant
- une pluralité de composants électroniques de puissance (4),
- qui sont agencés sur une pluralité de cartes de circuit imprimé (15),
- au moins deux cartes de circuit imprimé (15) étant agencées sur au moins deux plaques de refroidissement (16) agencées parallèlement l'une à l'autre, ayant respectivement deux surfaces de refroidissement (6) qui sont parallèles l'une à l'autre,
- de sorte qu'au moins une carte de circuit imprimé est agencée sur des surfaces de refroidissement mutuellement opposées des plaques de refroidissement,
- les plaques de refroidissement (16) présentant respectivement au moins deux trous traversants perpendiculaires aux surfaces de refroidissement (6),
- au moins deux tiges (20) étant prévues, lesquelles pénètrent dans les plaques de refroidissement (16) au niveau des trous traversants (22) et des dispositifs de verrouillage (24) étant disposés sur les tiges (20) pour fixer les plaques de refroidissement (16) le long d'un axe de tige (26) et
- des entretoises de support (28) étant agencées entre deux cartes de circuit imprimé (16) opposées respectives, et
- au moyen du dispositif de verrouillage (24), une précontrainte est appliquée le long des axes de tige (26), laquelle est contrecarrée par les entretoises de support (28), pressant ainsi les cartes de circuit imprimé (15) contre les surfaces de refroidissement (6) opposées des deux plaques de refroidissement (16) respectives,
- les conducteurs de champ (12) étant en connexion électrique avec le module électronique de puissance (2) et
- les tiges (20) du module électronique de puissance (2) étant réalisées sous forme de conducteurs de courant (18) reliés électriquement aux conducteurs de champ (12).

2. Moteur électrique selon la revendication 1, **caractérisé en ce que** les entretoises de support (28) sont conçues pour être déformables élastiquement le long d'un axe d'application de force (30) de l'entretoise de support (28).

3. Moteur électrique selon la revendication 1 ou 2, **caractérisé en ce que** des moyens de fixation (50) sont prévus sur les surfaces de refroidissement (6) pour fixer la carte de circuit imprimé (15) par rapport aux surfaces de refroidissement (6).

4. Moteur électrique selon l'une des revendications précédentes, **caractérisé en ce que** le dispositif de verrouillage (24) des tiges (20) comprend un vissage (32).

5. Moteur électrique selon la revendication 4, **caractérisé en ce que** les tiges (20) sont au moins partiellement pourvues d'un filetage.

6. Moteur électrique selon l'une des revendications précédentes, **caractérisé en ce que** le dispositif de verrouillage (24) comprend des douilles d'espacement (34) qui sont enfilées sur les tiges (20) entre deux plaques de refroidissement (16) respectives.

7. Moteur électrique selon l'une des revendications 1 à 5, **caractérisé en ce que** les tiges (20) présentent un diamètre variant par paliers.

8. Moteur électrique selon l'une des revendications précédentes, dans lequel les cartes de circuit imprimé (15) sont réalisées sous forme de secteur circulaire ou annulaire et les plaques de refroidissement (16) sont réalisées sous forme annulaire ou circulaire.

9. Moteur électrique selon l'une des revendications 1 à 8, **caractérisé en ce que** les tiges (20) du module électronique de puissance (2) sont directement raccordées aux conducteurs de champ (12) au moyen d'un dispositif de fixation (17).

10. Moteur électrique selon l'une des revendications 1 à 9, **caractérisé en ce que** les composants électroniques de puissance (4) sont configurés pour commander les conducteurs de champ (12).

11. Moteur électrique (10) selon l'une des revendications 1 à 10, dans lequel la plaque de refroidissement (16) est agencée perpendiculairement à l'axe (9) du moteur électrique (10).

12. Moteur électrique (10) selon l'une des revendications 1 à 11, **caractérisé en ce que** le module électronique de puissance (2) est configuré pour commander chacun des conducteurs de champ (12) avec une phase propre.
